# EUROPEAN PATENT SPECIFICATION

(11) **EP 3 239 065 B1**
(45) Date of publication and mention of the grant of the patent: **18.09.2019**
(21) Application number: 15873576.1
(22) Date of filing: 21.12.2015
(51) Int. Cl.: B65D 19/44, B65D 85/48

(54) **PALLET FOR TRANSFERRING A GLASS PLATE**
PALETTE ZUM TRANSPORTIEREN EINER GLASPLATTE
PALETTE POUR TRANSPORTER UNE PLAQUE EN VERRE

(30) Priority: 23.12.2014 KR 20140187129
(43) Date of publication of application: 01.11.2017
(73) Proprietor: LG Chem, Ltd., Yeoui-daero, Youngdungpo-gu Seoul 07336 (KR); LG Chem, Ltd., Seoul 07336 (KR)
(72) Inventor: KOO, Ja Hwal, Goyang-si Gyeonggi-do 10384 (KR); CHUNG, Hyun Chul, Paju-si Gyeonggi-do 10875 (KR); LEE, De Yeon, Cheongju-si Chungcheongbuk-do 28124 (KR)
(74) Representative: Rapisardi, Mariacristina
(86) International application number: PCT/KR2015/014020
(87) International publication number: WO 2016/105049

(56) References cited:
- WO-A1-2012/120715
- CN-A- 102 530 423
- CN-A- 103 129 854
- DE-C1- 3 607 766
- JP-A- 2010 275 016
- JP-A- 2011 063 284
- JP-A- 2013 014 353
- JP-A- 2013 199 328
- KR-A- 20090 114 251
- KR-A- 20120 071 342

## Description

### TECHNICAL FIELD

The present invention relates to a pallet for transferring a glass plate. More particularly, the present invention relates to a pallet for transferring a glass plate, which has a side fixing part that is in maximal contact with a side of each of glass plates stacked up so as to transfer the glass plates, thus minimizing damage to the glass plate due to the horizontal shaking of the glass plate.

### BACKGROUND ART

Currently, as the size of a TV, a monitor and others becomes larger and larger, the size of an LCD glass applied to the above-mentioned apparatus also has a tendency to increase. As the size of the glass becomes large, an interest in a pallet for safely supporting and transferring a supersized glass is growing.

Generally, the supersized glass is conveyed as follows: a plurality of glasses and interleaves, such as corrugated cardboard, for preventing the glasses from being in direct contact with each other are repeatedly stacked on a pallet to a predetermined height, and then a plurality of pallets on which the glasses and the interleaves are stacked is stacked and conveyed at once by a vibrationless vehicle.

Although the pallet is transferred while vibration is minimized using the vibrationless vehicle, slight vibration is inevitably generated. Thus, stacked glass plates may be shifted horizontally. In this case, each glass plate may collide with a side clamp for supporting a side of the glass plate, thus undesirably causing damage to the glass plate.

The side clamp is provided to suppress the horizontal motion of the glass plate. However, if the side clamp is installed at a position corresponding to an area of the glass plate, friction may occur between an edge of the glass plate and the side clamp upon loading the glass plate, so that the glass plate may be broken or damaged.

In order to solve the problem, the side clamp is installed to be spaced apart from the side of the glass plate by a minimum distance. However, the edge of the glass plate may collide with the side clamp by external shocks or vibrations, thus causing the edge of the glass to be damaged or broken at worst. CN 102530423 discloses a pallet for transferring a glass plate according to the preamble of claim 1. Furthermore, DE 3607766 discloses an object tensioning unit having a spring element between an adjusting drive and a quick tensioning lever.

### DISCLOSURE

### TECHNICAL PROBLEM

The present invention has been made in an effort to solve the above-described problems associated with related art. An object of the present invention is to provide a pallet for transferring a glass plate, which has a side fixing part that is in maximal contact with a side of each of glass plates stacked up so as to transfer the glass plates, thus minimizing damage to the glass plate due to the horizontal shaking of the glass plate.

Objects of the present invention are not limited to the above-mentioned objects, and other objects that are not mentioned herein will be clearly understood by those skilled in the art from the following description.

### TECHNICAL SOLUTION

In order to accomplish the above object, the present invention provides a pallet for transferring a glass plate according to claim 1. The pallet includes a lower frame, an upper frame seated on a top of the lower frame to allow a glass plate to be seated, and a side clamp including a fixating plate provided on a side of the upper frame to prevent horizontal shaking of the glass plate, and a distance adjusting part making the fixating plate approach or move away from the glass plate at a predetermined distance, wherein the distance adjusting part includes a base plate detachably attached to a side of a glass seating part and having a through-hole at a center thereof, a washer inserted into the through-hole of the base plate, an operation part joined to the washer, an elastic part provided to come into contact with a surface of the washer and maintaining a released or compressed state by operation of the operation part, and a linear shaft linearly moving toward the through-hole of the base plate by operating the operation part and by releasing and compressing the elastic part, thus adjusting a distance between the side clamp and the upper frame.

The operation part includes a pair of support parts protruding from a surface of the base plate to face each other, a rotating shaft passing through the pair of support parts, and a lever part provided to be rotatable about the rotating shaft and having a cam shape at a portion to which the rotating shaft is connected, thus compressing the elastic part according to a rotating angle.

The pallet further includes a washer provided between the lever part and the elastic part, a surface thereof coming into contact with the lever part being formed in a curved surface.

Further, the elastic part may be a leaf spring or a plate spring.

Further, the fixing plate may further include an elastic plate on a surface coming into contact with the glass plate.

Further, a plurality of distance adjusting parts may be provided.

### ADVANTAGEOUS EFFECTS

A pallet for transferring a glass plate of the present invention has the following effects:
First, the invention is advantageous in that a side clamp for fixing a side of each of glass plates stacked on a pallet is provided to adjust a distance in a horizontal direction, so that the side clamp moves away from the glass plate when loading or unloading the glass plate, and the side clamp comes into close contact with the glass plate during the transferring operation of the pallet, thus suppressing the shift of the position of the glass plate, and thereby allowing the glass plate to be easily loaded and unloaded and guaranteeing a stable transfer.
Second, the invention is advantageous in that an elastic plate is provided on a surface at which a fixing plate of a side clamp comes into contact with a glass plate, thus preventing the glass plate from being damaged owing to the elasticity of the elastic plate even if the side clamp comes into close contact with the glass plate, while easily absorbing shocks generated from an outside.
Third, the invention is advantageous in that it is easy to operate an operation part, so that a worker may easily control a separation distance of a side clamp.

Effects of the present invention are not limited to the above-mentioned effects, and other effects that are not mentioned herein will be clearly understood by those skilled in the art from the following claims.

### BRIEF DESCRIPTION OF THE DRAWINGS

The accompanying drawings are intended to illustrate the preferred embodiments of the invention, and aid in understanding the technical effects of the invention when reading the following description. It is to be interpreted that the invention is not limited to embodiments shown in the drawings.
FIG. 1 is a perspective view illustrating a pallet for transferring a glass plate according to the present invention;
FIG. 2 is a perspective view illustrating a side clamp according to the present invention;
FIG. 3 is a side view illustrating the side clamp according to the present invention; and
FIGS. 4 and 5 are views illustrating the use of a distance adjusting part according to the present invention.

### BEST MODE FOR THE INVENTION

Exemplary embodiments of the present invention will be described below in more detail with reference to the accompanying drawings.

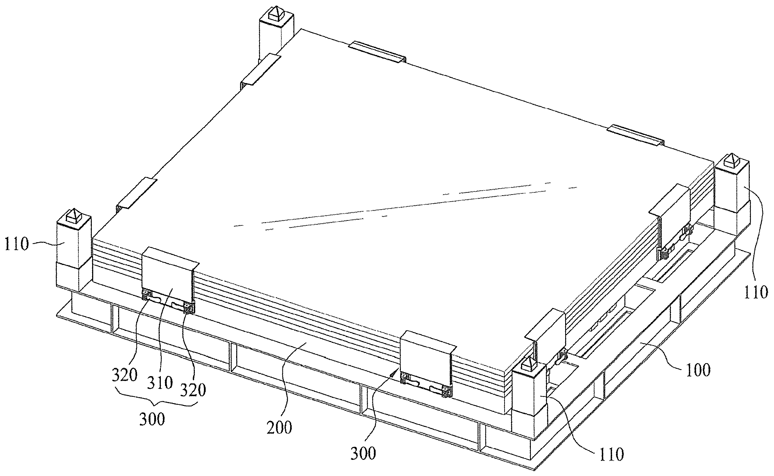

FIG. 1 is a perspective view illustrating a pallet for transferring a glass plate according to the present invention. As illustrated in FIG. 1, the pallet 10 for transferring the glass plate according to the present invention mainly includes a lower frame 100 and an upper frame 200.

The upper frame 200 is a device that is detachably attached to the top of the lower frame 100, and defines a space on the top to accommodate a plurality of glass plates that are to be stacked up. In order to minimize the shaking of the upper frame when the upper frame 200 is seated on the lower frame 100, the upper frame is fixed to the lower frame via a fixing protrusion or the like. Such an upper frame 200 may be variously formed depending on an area of the glass plate seated thereon. Since a detailed configuration of the upper frame is usually used in the art, its description will be omitted herein.

A side clamp 300 is provided on any one of sides of the upper frame 200 to suppress the horizontal motion or shaking of the plurality of stacked glass plates.

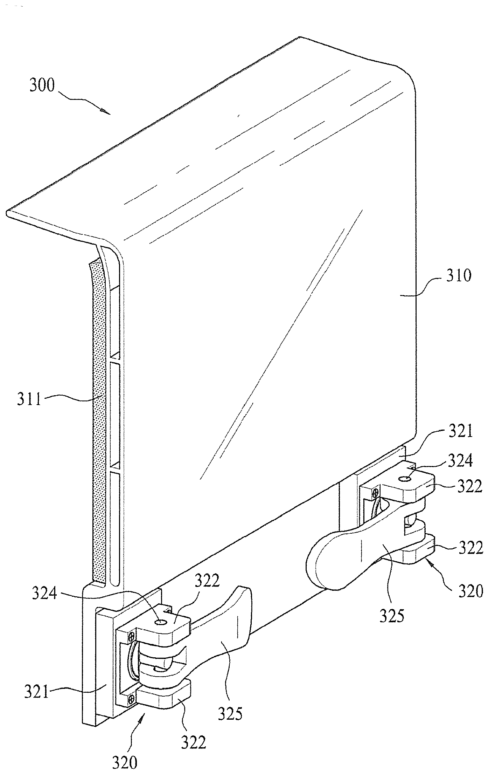

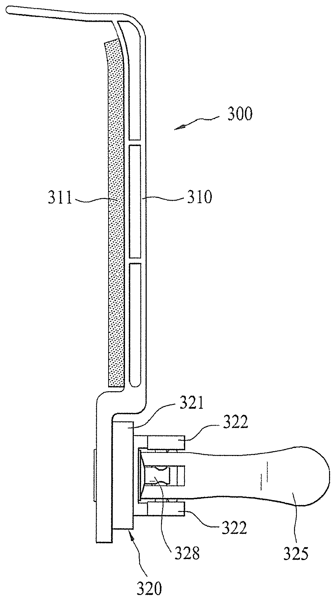

FIG. 2 is a perspective view illustrating the side clamp according to the present invention, and FIG. 3 is a side view illustrating the side clamp according to the present invention. As illustrated in FIGS. 1 to 3, the side clamp 300 includes a fixing plate 310 and a distance adjusting part 320.

The fixing plate 300 is a device that is attached to the side of the upper frame 200 to protrude from the top of the upper frame 200 by a predetermined length and supports the sides of the plurality of stacked glass plates. Such a fixing plate 300 has on a surface coming into contact with the glass plate an elastic plate 311 to absorb shocks. The elastic plate 311 may be made of any material as long as it has a predetermined elastic force and absorbs shocks when coming into contact with the glass plate. However, the elastic plate is preferably made of a rubber plate.

An interleaf is inserted between the plurality of stacked glass plates to prevent the glass plates from coming into contact with each other. Since an area of the interleaf is larger than that of the glass plate, the interleaf protruding out from the glass plate prevents the side clamp 300 from coming into direct contact with the glass plate. However, if the side clamp 300 is strongly compressed, the glass plate may be damaged. In order to prevent the glass plate from being damaged, the elastic plate 311 is provided.

The side clamp 300 is provided to reduce a gap between the side clamp and the side of the glass plate as small as possible, in consideration of the areas of the upper frame 200 and the glass plate. However, a certain gap may inevitably occur to allow the glass plate to be inserted. As such, if there is a gap between the side clamp 300 and the side of the glass plate, shocks may be transmitted, if any, to the glass plate due to vibrations and external shocks. In order to solve the problem, the distance adjusting part 320 is provided, which makes the side clamp 300 approach the glass plate as near as possible after the glass plates have been stacked up, thus minimizing the gap between the glass plate and the side clamp 300. Thus, in order to adjust the distance between the fixing plate 300 and the glass plate by the distance adjusting part 320, the fixing plate 300 is fixed to be movable horizontally while having a predetermined gap between the fixing plate and the side of the upper frame 200, by a linear shaft 328 that will be described later.

Such a distance adjusting part 320 will be described below in detail.

The distance adjusting part 320 is a device that is provided on a lower portion of the fixing plate 300, preferably, a predetermined position of a surface of the fixing plate 300 that is opposite to the other surface of the fixing plate 300 coming into contact with the upper frame 200 to cause the fixing plate 300 to approach or move away from the glass plate.

Such a distance adjusting part 320 mainly includes a base plate 321, a washer 323, an operation part, a curved washer, an elastic part 327, and a linear shaft 328.

The base plate 321 is a device that is provided on a lower portion of a surface that is opposite to the other surface of the fixing plate 300 coupled to the upper frame 200 to define a space for accommodating components of the distance adjusting part 320. Such a base plate 321 is formed in the shape of a flat plate, and has at a central portion thereof a through-hole to allow the linear shaft 328 to pass therethrough.

The washer 323 is a device that is inserted into the through-hole formed in the central portion of the base plate 321 and defines a space to allow the curved washer or the like to be stably seated therein. Such a washer 323 may be a flat washer, but preferably may be a recessed washer to allow the inserted curved washer to be fixed without being changed in position by the operation of the operation part.

The elastic part 327 is a device that is provided on a predetermined portion of a lower surface or an upper surface of the washer 323 to make the fixing plate 300 approach or move away from the glass plate while being kept compressed or released by the operation of the operation part. Such an elastic part 327 may be made of any material as long as it has a predetermined elastic force. However, the elastic part may be preferably a spring, and more preferably a leaf spring or a plate spring.

Further, the elastic part 327 may be provided on the lower surface of the washer 323 to be entirely compressed by the compression of the washer 323, thus allowing external force to be evenly transmitted from the operation part to the elastic part.

The operation part is a device that applies or removes external force to or from the elastic part 327 by a user's operation, thus compressing or releasing the elastic part 327. The operation part may employ any device as long as it achieves an intended purpose. The configuration of the operation part according to an embodiment will be described in more detail.

The operation part includes a support part 322, a rotating shaft 324, and a lever part 325.

The support part 322 is a pair of plate-shaped members that protrude from a surface of the base plate 321 to face each other. In this regard, the pair of support parts 322 is provided to be symmetric with respect to a center of the through-hole formed at the center of the base plate 321.

The rotating shaft 324 passes through the pair of support parts 322 and then is fixed, thus serving as the rotation center of the lever part 325.

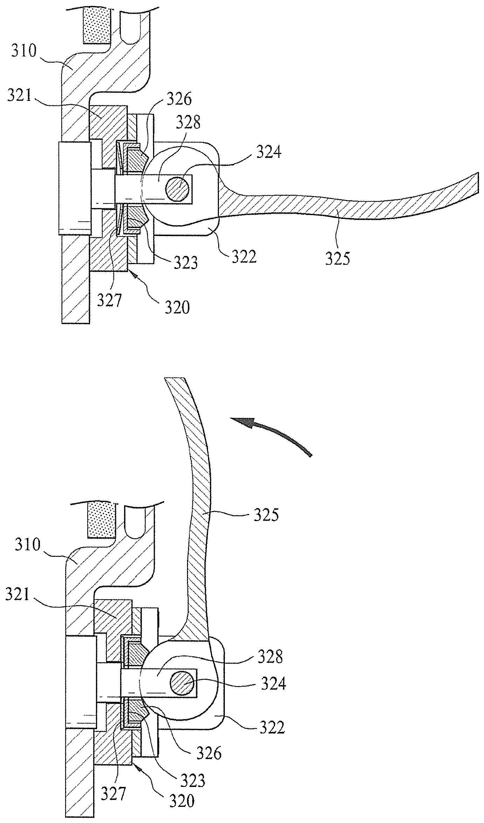

FIGS. 4 and 5 are views illustrating the use of the distance adjusting part according to the present invention. The lever part 325 is provided to be rotatable about the rotating shaft 324, and has on a portion coupled with the rotating shaft 324 a cam shape to adjust the compression and release of the elastic part 327 depending on the rotating angle. As such, since the portion of the lever part coupled with the rotating shaft 324 has the cam shape, it is possible to compress or release the elastic part 327 by operating the lever part 325, as illustrated in FIGS. 4 and 5. The driving of the elastic part 327 and the driving of the fixing plate 300 by the operation part will be described below in more detail.

The curved washer having on a surface thereof a curved surface, like a neck washer 326, is provided between the lever part 325 and the washer 323 to more easily and evenly transmit external force transmitted by the cam shape of the lever part 325 to the washer 323 and the elastic part 327. Since the surface of the curved washer has the curved surface corresponding to the cam shape of the lever part 325, like the neck washer 326, it is easy to operate the lever part 325, and it is possible to evenly transmit the external force transmitted by the cam shape to the washer 323 and the elastic part 327. According to an intended use, it is possible to use a plate-shaped member made of an elastic material that may be flexibly deformed in conformity with the cam shape of the lever part 325, instead of the neck washer 326.

One end of the linear shaft 328 passes through the fixing plate 300 to be inserted into the side of the upper frame 200, while the other end is fixed to the elastic part 327 or the rotating shaft 324 of the operation part. Thus, as the operation part is operated, the linear shaft causes the fixing plate 300 to approach or move away from the glass plate.

Although it is shown in the drawings that one end of the linear shaft 328 is fixed to the rotating shaft 324 of the operation part, the linear shaft may be fixed to a side of the elastic part 327 according to an intended use.

As illustrated in FIG. 4, in a stand-by state before the operation part is driven, the elastic part 327 is kept released. Thus, the fixing plate 300 is spaced apart from the side of the glass plate by a predetermined distance, thus allowing the glass plate to be easily seated and stacked on the upper frame 200.

Subsequently, if the stacking of the glass plates has been completed, as illustrated in FIG. 5, the lever part 325 of the operation part is rotated in one direction. Then, as the external force is transmitted to the neck washer 326, the washer 323 and the elastic part 327 by the cam shape of the lever part 325, the elastic part 327 is compressed and the linear shaft 328 is pulled out from the upper frame 200. If the linear shaft 328 is pulled out from the upper frame 200 as such, the fixing plate 300 approaches the upper frame 200 and comes into close contact with the side of the glass plate, thus preventing the glass plate from being shaken and vibrated. In the state where the side clamp 300 is compressed, the glass plate is stably fixed by the elasticity of the rubber plate provided inside the fixing plate 300, and vibrations and shocks transmitted to the glass plate are minimized.

Thereafter, when one desires to unload the glass plate from the upper frame 200, the lever part 325 is rotated in the other direction. Then, the elastic part 327 is released and the linear shaft 328 moves inwards relative to the upper frame 200, and the fixing plate 300 generates the gap between it and the upper frame 200. As such, the gap is generated between the fixing plate 300 and the glass plate, thus making it easy to unload the glass plate.

A plurality of distance adjusting parts 320 configured as described above may be provided on a side of the fixing plate 300 to allow the fixing plate 300 to stably and uniformly approach or move away from the glass plate. Although it is shown in the drawings that two distance adjusting parts 320 are provided on one fixing plate 300, it is apparent that a single distance adjusting part 320 or two or more distance adjusting parts 320 may be provided according to an intended use.

In order to transfer the lower frame 100 via a transferring apparatus or the like, a side of the lower frame 100 may be fixed and then lifted and transferred by a transfer arm. The lower frame 100 has on a side thereof a plurality of support columns to stack the plurality of pallets 10 while separating them from each other at a predetermined interval, thus allowing a great number of glass plates to be simultaneously conveyed. Since such a lower frame 100 is usually used in the art, a detailed description thereof will be omitted herein.

A plurality of shock absorbers may be provided between the lower frame 100 and the upper frame 200 to mitigate external shocks and vibrations. As long as the shock absorber may easily mitigate external shocks and vibrations, it may be made of any material and may have any shape.

While the invention has been shown and described with reference to exemplary embodiments thereof, it will be understood by those skilled in the art that various changes in form and details may be made therein without departing from the scope of the invention as defined by the appended claims.

## Claims

1. A pallet (10) for transferring a glass plate comprising:
a lower frame (100);
an upper frame (200) seated on a top of the lower frame (100) to allow a glass plate to be seated; and
a side clamp (300) comprising:
a fixating plate (310) provided on a side of the upper frame (200) to prevent horizontal shaking of the glass plate; and
a distance adjusting part (320) making the fixating plate approach or move away from the glass plate at a predetermined distance,
**characterized in that** the distance adjusting part (320) comprises:
a base plate (321) detachably attached to a side of a glass seating part and having a through-hole at a center thereof;
a washer (323) inserted into the through-hole of the base plate (321);
an operation part joined to the washer;
an elastic part (327) provided to come into contact with a surface of the washer (323) and
maintaining a released or compressed state by operation of the operation part; and
a linear shaft (328) linearly moving toward the through-hole of the base plate (321) by operating the operation part and by releasing and compressing the elastic part (327), thus adjusting a distance between the side clamp (300) and the upper frame (200),
the operation part comprising:
a pair of support parts (322) protruding from a surface of the base plate (321) to face each other;
a rotating shaft (324) passing through the pair of support parts (322); and
a lever part (325) provided to be rotatable about the rotating shaft (324), and having a cam shape at a portion to which the rotating shaft (324) is connected, thus compressing the elastic part (327) according to a rotating angle,
the distance adjusting part (320) further comprising a curved washer having on a surface thereof a curved surface, like a neck washer (326), said curved washer being provided between the lever part (325) and the washer (323), said curved surface corresponding to the cam shape of the lever part (325) in order to easily and evenly transmit external force transmitted by the cam shape of the lever part (325) to the washer (323) and the elastic part (327).

2. The pallet (10) of claim 1, wherein the elastic part (327) is a leaf spring or a plate spring.

3. The pallet (10) of claim 1, wherein the fixing plate (310) further comprises an elastic plate (311) on a surface coming into contact with the glass plate.

4. The pallet (10) of claim 1, wherein a plurality of distance adjusting parts (320) is provided.

## Patentansprüche

1. Palette (10) zum Transportieren einer Glasplatte, umfassend:
einen unteren Rahmen (100);
einen oberen Rahmen (200), der auf einer Oberseite des unteren Rahmens (100) sitzt, damit eine Glasplatte sitzen kann; und
eine Seitenklemme (300), umfassend:
eine Fixierplatte (310), die an einer Seite des oberen Rahmens (200) vorgesehen ist, um ein horizontales Schütteln der Glasplatte zu verhindern; und
einen Abstandseinstellteil (320), der bewirkt, dass sich die Fixierplatte in einem vorbestimmten Abstand der Glasplatte nähert oder von dieser wegbewegt,
**dadurch gekennzeichnet, dass** der Abstandseinstellteil (320) umfasst:
eine Basisplatte (321), die abnehmbar an einer Seite eines Glassitzteils angebracht ist und in ihrer Mitte ein Durchgangsloch aufweist;
eine Unterlegscheibe (323), die in das Durchgangsloch der Basisplatte (321) eingesetzt ist;
einen Betätigungsteil, der an die Unterlegscheibe angeschlossen ist;
einen elastischen Teil (327), der vorgesehen ist, um mit einer Oberfläche der Unterlegscheibe (323) in Kontakt zu kommen und um einen gelösten oder
zusammengedrückten Zustand durch Betätigung des Betätigungsteils aufrechtzuerhalten; und
eine lineare Welle (328), die sich durch Betätigen des Betätigungsteils und durch Lösen und Zusammendrücken des elastischen Teils (327) linear in Richtung des Durchgangslochs der Basisplatte (321) bewegt, wodurch ein Abstand zwischen der Seitenklemme (300) und dem oberen Rahmen (200) eingestellt wird,
der Betriebsteil umfassend:
ein Paar Stützteile (322), die von einer Oberfläche der Basisplatte (321) vorstehen, um einander zugewandt zu sein;
eine Drehwelle (324), die durch das Paar von Stützteilen (322) verläuft; und
einen Hebelteil (325), der so vorgesehen ist, dass er um die Drehwelle (324) drehbar ist und an einem Abschnitt, mit dem die Drehwelle (324) verbunden ist,
eine Nockenform aufweist, wodurch der elastische Teil (327) entsprechend einem Drehwinkel zusammengedrückt wird,
wobei der Abstandseinstellteil (320) zudem eine gekrümmte Unterlegscheibe umfasst, die auf ihrer Oberfläche eine gekrümmte Oberfläche wie eine Halsunterlegscheibe (326) aufweist, wobei die gekrümmte Unterlegscheibe zwischen dem Hebelteil (325) und der Unterlegscheibe (323) vorgesehen ist, wobei die gekrümmte Oberfläche der Nockenform des Hebelteils (325) entspricht, um die durch die Nockenform des Hebelteils (325) übertragene äußere Kraft leicht und gleichmäßig auf die Unterlegscheibe (323) und den elastischen Teil (327) zu übertragen.

2. Palette (10) nach Anspruch 1, wobei der elastische Teil (327) eine Blattfeder oder eine Tellerfeder ist.

3. Palette (10) nach Anspruch 1, wobei die Fixierplatte (310) zudem eine elastische Platte (311) auf einer Oberfläche aufweist, die mit der Glasplatte in Kontakt kommt.

4. Palette (10) nach Anspruch 1, wobei eine Vielzahl an Abstandseinstellteilen (320) vorgesehen sind.

## Revendications

1. Palette (10) pour transporter une plaque en verre comprenant :
un châssis inférieur (100) ;
un châssis supérieur (200) placé sur un sommet du châssis inférieur (100) pour permettre à une plaque en verre d'y être placée ; et
un élément de serrage latéral (300) comprenant :
une plaque de fixation (310) prévue sur un côté du châssis supérieur (200) pour empêcher le secouement horizontal de la plaque en verre ; et
une pièce de réglage (320) de la distance permettant à la plaque de fixation de s'approcher ou de s'éloigner de la plaque en verre à une distance prédéterminée,
**caractérisée en ce que** la pièce de réglage (320) de la distance comprend :
une plaque de base (321) fixée de façon amovible à un côté d'une partie de logement en verre et comportant un trou débouchant en son centre ;
une rondelle (323) introduite dans le trou débouchant de la plaque de base (321) ;
une pièce fonctionnelle assemblée à la rondelle ;
une pièce élastique (327) prévue pour se mettre en contact avec une surface de la rondelle (323) et maintenant un état libéré ou comprimé par le fonctionnement de la partie fonctionnelle ; et
un arbre linéaire (328) se déplaçant linéairement vers le trou débouchant de la plaque de base (321) par le fonctionnement de la partie fonctionnelle et en libérant et comprimant la pièce élastique (327), pour ainsi régler une distance entre l'élément de serrage latéral (300) et le châssis supérieur (200),
la partie fonctionnelle comprenant :
une paire de pièces de support (322) dépassant d'une surface de la plaque de base (321) pour se faire face réciproquement ;
un arbre rotatif (324) passant à travers la paire de pièces de support (322) ; et
une partie de levier (325) prévue pour pouvoir tourner autour de l'arbre rotatif (324) et ayant une forme en came en correspondance d'une partie à laquelle est relié l'arbre rotatif (324), pour ainsi comprimer la pièce élastique (327) selon un angle de rotation,
la pièce de réglage (320) de la distance comprenant de plus une rondelle incurvée ayant sur sa surface une surface incurvée, comme une rondelle à col (326), ladite rondelle incurvée étant prévue entre la partie de levier (325) et la rondelle (323), ladite surface incurvée correspondant à la forme en came de la partie de levier (325) afin de transmettre facilement et uniformément la force extérieure transmise par la forme en came de la partie de levier (325) à la rondelle (323) et à la pièce élastique (327).

2. Palette (10) selon la revendication 1, dans laquelle la pièce élastique (327) est un ressort à lames ou un ressort à disques.

3. Palette (10) selon la revendication 1, dans laquelle la plaque de fixation (310) comprend de plus une plaque élastique (311) sur une surface se mettant en contact avec la plaque en verre.

4. Palette (10) selon la revendication 1, dans laquelle il est prévu une pluralité de pièces de réglage (320) de la distance.
